# EUROPEAN PATENT SPECIFICATION

(11) **EP 4 551 851 B1**
(45) Date of publication and mention of the grant of the patent: **18.11.2026**
(21) Application number: 23720085.2
(22) Date of filing: 17.04.2023
(51) Int. Cl.: F16L 9/02, F16L 13/02, F16L 13/08, F16L 19/028, F16L 13/007, F16L 25/00

(54) **HOUSING ASSEMBLY FOR USE IN A HEAT EXCHANGE SYSTEM**
GEHÄUSEANORDNUNG ZUR VERWENDUNG IN EINEM WÄRMETAUSCHERSYSTEM
ENSEMBLE BOÎTIER DESTINÉ À ÊTRE UTILISÉ DANS UN SYSTÈME D'ÉCHANGE DE CHALEUR

(30) Priority: 04.07.2022 DK PA202200643
(43) Date of publication of application: 14.05.2025
(73) Proprietor: Danfoss A/S, 6430 Nordborg (DK)
(72) Inventor: PAWLIK, Jens, 6430 Nordborg (DK); BIRKELUND, Michael, 6430 Nordborg (DK)
(74) Representative: Patentanwälte Olbricht Buchhold Keulertz
(86) International application number: PCT/EP2023/059934
(87) International publication number: WO 2024/008343

(56) References cited:
- DE-A1- 102019 008 480
- US-A- 2 613 958
- US-B2- 10 663 094
- US-B2- 8 602 459

## Description

The present invention pertain to a housing assembly for use in a heat exchange system. The housing assembly comprises an aluminium housing with at least two fluid ports, wherein each fluid port is connected to a bi-metal connector, wherein the bi-metal connector comprises an inner copper layer and an outer stainless steel layer, and wherein the aluminium housing comprises connection portions for connecting the bi-metal connectors.

Housing assemblies for use in heat exchange systems are pressure tight compartments for components such as valves and/or sight glasses. The housing assemblies are designed for use with refrigeration or air conditioning systems. They may be the component of the corresponding system, which are subjected to the system pressure and have the primary function of containing the system pressure. There are typically no restrictions on the components inside the housing with regards to their capability to handle pressure. The housing assemblies are typically made of brass such that they can easily be joined to copper fluid conduits. Typically, refrigeration systems or heat exchange systems have copper conduits in which a refrigerant fluid flows. Valve housings and other housings are typically made out of brass.

The housing assembly can have secondary functions like providing flow paths, guiding surfaces, sliding surfaces and similar mechanical, thermal, flow-related or thermodynamic functions. A typical refrigeration valve housing assembly or line component housing assembly will have one or more fluid ports, depending on the required function and/or design. These fluid ports are used to connect the internal void i.e. the pressurized part of the housing assembly with the system, to which the housing assembly is connected. When connecting a line component or valve to a system, brazing is the industry standard of installation, though there are other principles like glue/sealant based methods, threaded connections, flare connectors etc.

When mounting valves with brass housings and cupper connectors in a refrigeration system with copper conduits in the field, typically challenges are encountered such as debrazing of the valve connectors from the brass housing and a significant influx of heat, which may harm elements within the valve, such as e.g. O-rings and gaskets.

Instead of using brass for the housing, aluminium housing assemblies may be used for e.g. cost reasons or to reduce the amount of lead in the housing alloy. These aluminium housings typically still need to be fluidly connected to copper conduits at the site of the heat exchange system. This may lead to problems related to the connection of the dissimilar materials of the housing and the copper conduits. For example, galvanic corrosion may occur on the outer surfaces of aluminium components. Existing heat conductance issues are also getting worse, as aluminium conduits conduct heat better than brass conduits.

Once the conduit is joined to the housing, the joint is required to be cleaned and excess material needs to be removed in case of e.g. friction welded joints. Furthermore, in order to ensure correct functioning of the housing assembly, the housing assembly needs to be leak tested prior to its use. The above items are typically difficult to handle in the field, especially for joints of dissimilar material components.

From the prior art, devices similar to the present housing assembly are known. For example, document US 2 613 958 A discloses a coupling specifically designed for double-walled, thread-less pipes, where only the inner wall is exposed to fluid, thereby protecting the outer sheath. The concept involves removing a portion of the outer sheath, installing a ferrule over the exposed lining, and forming an outwardly bulged, double-walled flange on the lining through axial compression, which is then clamped between coupling components to form a leaktight seal. The design also includes features to prevent damage to the flange, support the pipe against pressure and vibration, and ensure reliable sealing by using elements like chamfered edges, concave clamping surfaces, and optional lock washers or wedge rings. This system allows secure and durable connections between double-walled pipes or with standard fittings, while maintaining internal corrosion resistance and structural integrity.

Document DE 10 2019 008480 A1 discloses a transition component for connecting parts of a chemical or process engineering plant, particularly for cryogenic applications. The component includes two material segments made of different, non-weldable materials joined by at least one intermediate layer, typically bonded via explosive cladding. To reduce mechanical and thermal stress, an outer flange assembly is added for stabilization, optionally including a seal and sensors to detect leaks. An alternative design replaces the intermediate layer with a bayonet connection that provides a mechanically interlocking and optionally adhesive or soldered, fluid-tight joint.

Document US 10 663 094 B2 discloses an interface for connecting pipes or attaching pipes to valves, particularly suitable for use with plastic pipes in water supply systems. The invention addresses problems with conventional brass fittings, such as stress corrosion and incompatibility with plastic, by providing a reusable, tight-fitting connector that avoids tapered seals and supports high-pressure applications. The disclosed fitting comprises a plastic housing, O-rings, a clamping sleeve, and a threaded nut, allowing for tool-free disassembly and reassembly while preventing twisting or stress on the connected pipes. The system accommodates various pipe materials, including plastic and metal, and enables a secure seal even under pressures up to 60 bar.

Document US 8 602 459 B2 discloses a connection fitting for a refrigerant conduit in an aircraft environmental control system, designed to withstand extreme temperatures and pressures. The disclosed connector assembly comprises a metal seal compressed between a connector and a nipple, secured by a threaded nut, ensuring a fluid-tight seal without degradation over a wide operating range. The materials used-such as aluminum-coated stainless steel and Inconel-are selected to prevent galvanic corrosion and maintain integrity under harsh conditions. The design enables reliable assembly, disassembly, and long-term sealing performance despite exposure to refrigerants, lubricants, and temperature extremes from -70°F to over 300°F.

The aim of the present invention is to overcome the problems mentioned above. This aim is attained by an improved housing assembly according to claim 1 and a set according to claim 7. Preferable embodiments are subject to the dependent claims.

According to claim 1, a housing assembly for use in a heat exchange system is provided. The housing assembly comprises an aluminium housing with at least two fluid ports, wherein each fluid port is connected to a bi-metal connector, wherein the bi-metal connector comprises an inner copper layer and an outer stainless steel layer, and wherein the aluminium housing comprises connection portions for connecting the bi-metal connectors.

The presently described housing assembly comprises the aluminium housing or body and connectors of a different material than the aluminium housing. It is possible to use highly specialized joining equipment at e.g. a production site of the housing assembly for joining the different materials of the housing assembly's components. This opens the opportunity of using joining methods that are not suitable in the field and may be difficult to handle for certain users of the housing assembly, such as OEMs.

The above outlined problems of the prior art are solved by using a stainless steel connector with copper coating on the inside. The coating can be applied mechanically. An alternative approach is to apply the coating via a galvanic coating. This will however place copper on both the inside and outside of the connector. Such a connector cannot be used due to galvanic corrosion hap-ping on the outer surface of the aluminium component, unless the copper is removed eg. mechanically on the outside.

When replacing the typical brass housing with an aluminium housing, the heat influx increases as well as the risk of galvanic corrosion happening on the outer surface of the valve due to dew condensing on the valve housing exposed to atmospheric oxygen. These obstacles are overcome by using bimetal connectors.

Bimetal connectors are stainless steel tubes with an e.g. 40 micrometre layer of copper. They reduce the heat influx, as stainless steel is a considerably poorer heat conductor than copper. Galvanic corrosion is also reduced, as iron is closer to aluminium than to copper components in terms of their respective galvanic potential.

The present inventions makes it possible to utilize non-hot assembly methods like friction welding or magnetic pulse welding, which have the advantage that they cannot be easily destroyed or debrazed when the housing assembly is installed in the field or at an OEM. It is possible to easily connect the presently described housing assembly to e.g. copper pipes, even though the housing assembly comprises an aluminium housing. This means that standard methods, which are used, for connecting copper housings to copper pipes may be used for connecting the aluminium housing of the presently described housing assembly to copper pipes via the connectors. As a result, from a practical point of view, the presently described housing assembly may be handled as if it was made of brass and/or copper rather than aluminium.

The present invention simplifies the replacement of brass housings with aluminium housing. Aluminium is cheaper than brass and the price difference is expected to grow over time. Furthermore, aluminium can be easier reused compared to brass and therefore it is considered to be the better choice from an environmental point of view.

In a preferred embodiment of the invention, the connection portions comprise threaded portions, welding portions, and/or brazing portions. The connection portions may be oriented coaxially with respect to each other. The connection portions may protrude from a central structure of the aluminium housing and/or may be formed integrally with the remainder of the aluminium housing.

In another preferred embodiment of the invention, the inner copper layer is brazed and/or welded to the aluminium housing. The connector may comprise some flange portion oriented in a radial direction of the connector. The inner copper layer may be provided at least partially on the flange portion for contacting the connection portion of the aluminium housing.

In another preferred embodiment of the invention, the bi-metal connector is furnace brazed, conveyor belt brazed, induction brazed, laser brazed, laser welded without a filler, laser welded with a filler, stir welded, rotational welded, ultrasonic welded, electromagnetic pulse welded, TIG welded, and/or MIG welded to the aluminium housing. Typically, a single joining technology may be used. However, combinations of two or more of the above joining technologies may be applied in alternative embodiments.

In another preferred embodiment of the invention, the outer stainless steel layer covers all or a substantial portion of the inner copper layer. An interior side of the stainless steel layer may be connected to an exterior side of the inner copper layer via e.g. a material connection.

In another preferred embodiment of the invention, the connection portions comprise threaded portions and a sleeve nut is screwed to the threaded portion of the connection portions and a portion of the bi-metal connector is provided between the sleeve nut and the connection portion. The flange portion of the bi-metal connector may hence be used for receiving a pressure from the sleeve nut, forcing the connector against the connection portions of the aluminium housing.

The invention is also directed at a set according to claim 7. A user may connect the components according to existing requirements. The components may be arranged in a single dedicated package. Alternatively. The components may be provided separated from each other first and brought together only at a later stage. The components of the present invention's housing assembly may therefore be provided in a separated state, but still be covered by the present invention's scope.

Further details and advantages of the invention are described with reference to the figures. The figures show:
Figure 1: a perspective view of a first embodiment of the housing assembly;
Figure 2: a section view of the first embodiment of the housing assembly;
Figure 3: a detailed section view of the first embodiment of the housing assembly;
Figure 4: a perspective view of a second embodiment of the housing assembly;
Figure 5: a section view of the second embodiment of the housing assembly; and
Figure 6: a detailed section view of the second embodiment of the housing assembly.

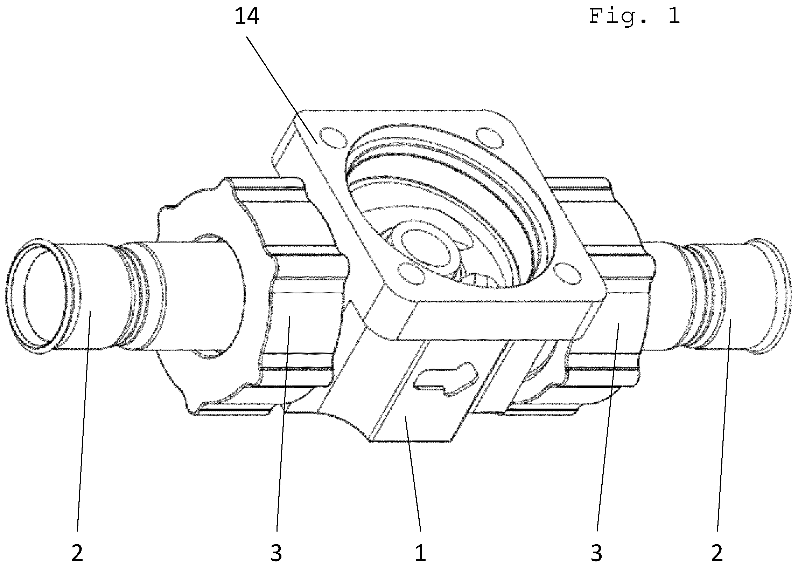

Figure 1 shows a perspective view of a first embodiment of the housing assembly. The housing assembly is provided for use in a heat exchange system, such as an air conditioning system, a heat pump or a refrigeration application. The housing assembly comprises an aluminium housing 1 to which two bi-metal connectors 2 are connected. In the first embodiment, sleeve nuts 3 or similar structures may be provided for fixing the connectors 2 to the aluminium housing 1. The connectors 2 may be provided on opposite sides of the aluminium housing 1. The connectors 2 may be formed cylindrically and/or may be arranged coaxially to each other.

The aluminium housing 1 may comprise a side flange portion 14. The side flange portion 14 is provided for connecting valve elements, sight glasses or other components to the housing assembly. The side flange portion 14 may be connected to a side housing containing said valve elements and/or other components. The side flange portion 14 may be arranged in parallel to the axes of the connectors 2. The side flange portion 14 may comprise an opening, which communicates with the inside of the aluminium housing.

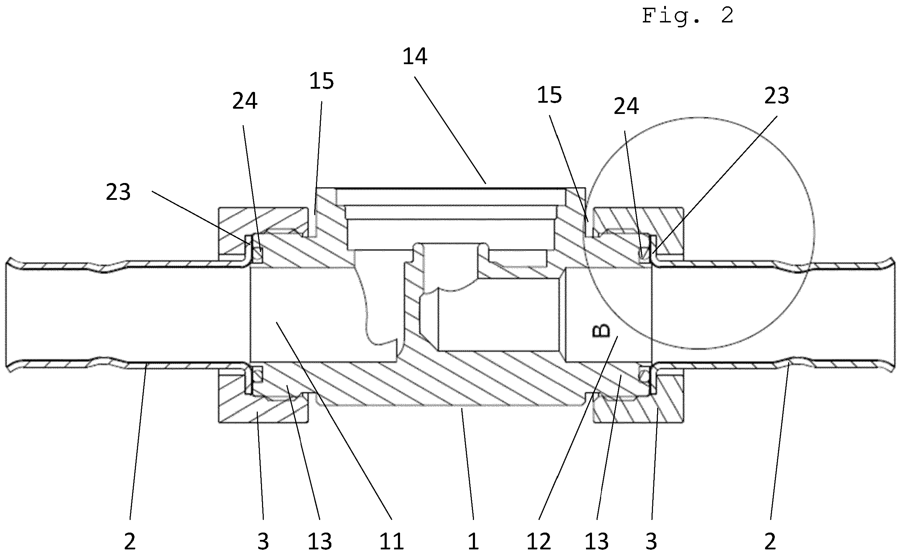

Figure 2 shows a section view of the first embodiment of the housing assembly. The aluminium housing 1 comprises at least two fluid ports 11, 12. The fluid ports 11, 12 may communicate with the side flange portion 14. Each fluid port 11, 12 is fluidly connected to a bi-metal connector 2. The connectors 2 contact connection portions 13 of the aluminium housing 1.

The connectors 2 comprise a flange portion 23 each, which is an end portion of the connectors 2 contacting the aluminium housing 1. The connectors 2 are pressed against the aluminium housing 1 via the flange portions 23 by means of the sleeve nuts 3. The flange portions 23 may have the same outer diameter as the fluid ports 11, 12 at their contact surface.

Seals 24 may be provided within a groove of the connection portions 13 sealing the connection portions 13 against the flange portions 23. The seals 24 may be made of an elastic material and prevent leakage between the inside of the fluid ports 11, 12 and the outside of the structure.

There may be a narrow circumferential gap 15 between the side flange portion 14 and the sleeve nut 3. The width of the gap 15 may correspond to 50% to 200% of the thickness of the connector 2 walls. The connectors 2 may be formed as identical parts. In alternative embodiments, the fluid ports 11, 12 may be arranged other than coaxially. For example, the fluid ports 11, 12 may be arranged at an angle of between 0° and 180° to each other.

The connection portions 13 of the aluminium housing 1 are provided for connecting the aluminium housing 1 to the connectors 2. The fluid ports 11, 12 may be arranged at least partially within the connection portions 13. The connection portions 13 of the first embodiment comprise threaded portions for screwing the sleeve nut 3 to the aluminium housing 1.

The connection portions 13 may be oriented coaxially with respect to each other. The connection portions 13 may be oriented concentrically with respect to their respective fluid port 11, 12. The connection portions 13 and/or the side flange portion 14 may protrude from a central structure of the aluminium housing 1 and/or may be formed integrally with the remainder of the aluminium housing 1.

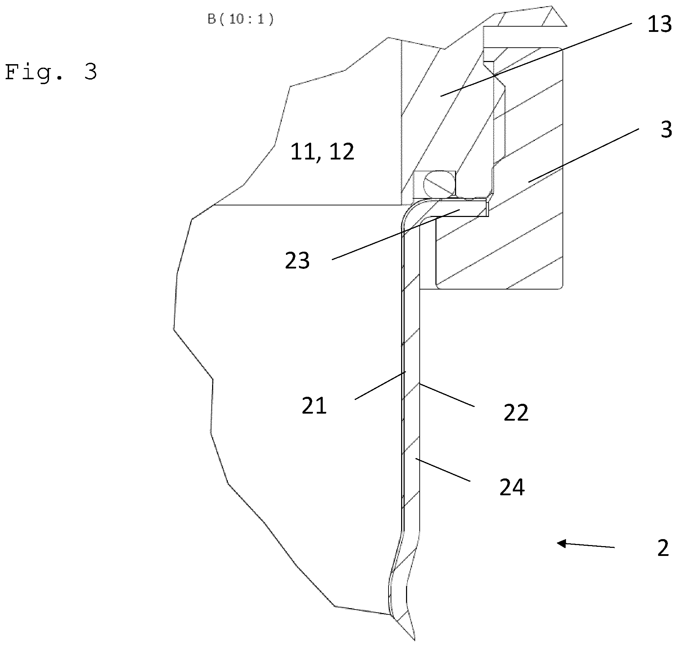

Figure 3 is a detailed section view of the first embodiment of the housing assembly. One portion of a connector 2 is shown fixed against a connection portion 13 by means of a sleeve nut 3. The sleeve nut 3 is screwed onto a threaded portion of the connection portion 13 and presses the connector 2 against the connection portion 13. A portion of the connector 2 is provided between the sleeve nut 3 and the connection portion 13. The flange portion 23 of the bi-metal connector 2 may hence be used for receiving a pressure from the sleeve nut 3, forcing the connector 2 against the connection portions 13 of the aluminium housing 1.

The connector 2 comprise an inner copper layer 21 and an outer stainless steel layer 22. The inner diameter of the inner copper layer 21 may be equal to the inner diameter of the fluid port 11, 12. The flange portion 23 of the connector may be arranged perpendicular to a cylindrical portion 24 of the connector 2.

The copper interiors of the bi-metal connectors 2 make it possible to easily connect the housing assembly to e.g. copper pipes. The copper pipes are not shown in the figures. The copper pipes are usually used to fluidly connect the housing assembly to some heat exchange system.

As the housing assembly comprises an aluminium housing 1, a direct connection, such as brazing, between the housing assembly and some external copper conduits would be much more difficult to provide on the site of a heat exchange system.

The presently described housing assembly comprising the connected bi-metal connectors 2 makes it possible to fluidly connect the housing assembly to any suitable copper conduit by e.g. brazing the copper conduit to the inner copper layer 21 of the connector 2. This can be easily done at any given site, as it does not required complicated joining methods.

Standard methods, which are used for connecting copper components to each other, may hence be used for connecting the aluminium housing 1 of the presently described housing assembly to copper pipes. As a result, the presently described housing assembly may be handled as if it was made entirely of more expensive brass/copper materials rather than the presently used aluminium.

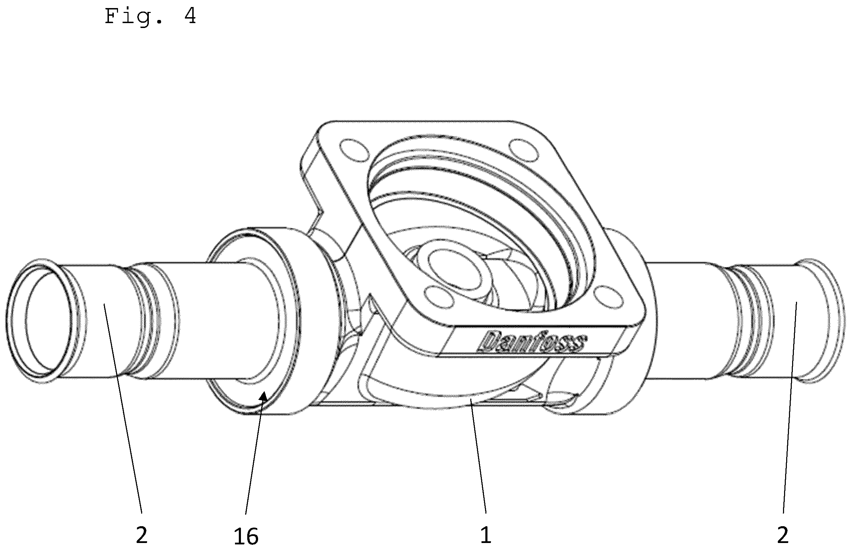

Figure 4 is a perspective view of a second embodiment of the housing assembly. In contrast to the first embodiment, no sleeve nuts 3 are used to connect the connectors 2 to the aluminium housing 1. Rather, circumferential grooves 16 are provided at the aluminium housing 1, into which the connectors 2 may be partially inserted.

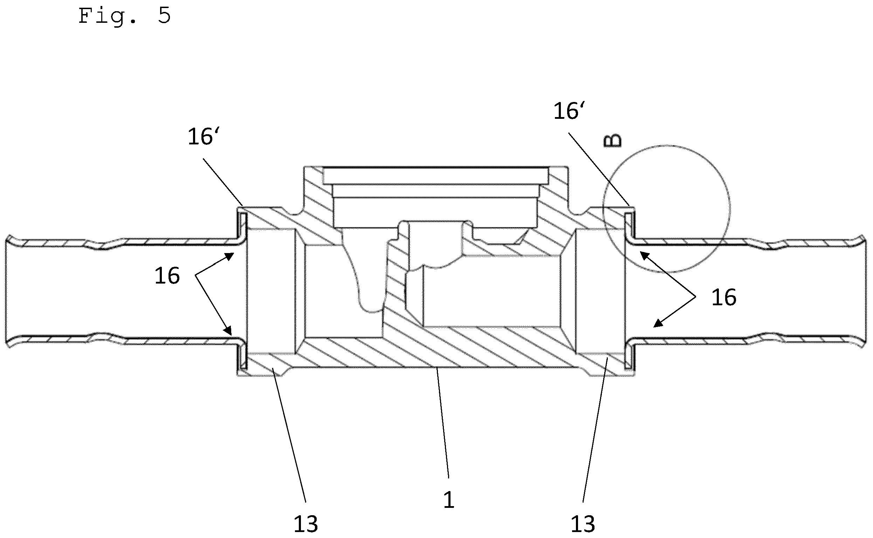

Figure 5 is a section view of the second embodiment of the housing assembly. The connection portions 13 of the second embodiment comprise the circumferential grooves 16, which are bound by radially outer walls 16'. The grooves 16 may have a circular plane surface contacting the connector 2 and extending in a radial direction. The grooves 16 may comprise welding portions and/or brazing portions for connecting the connector 2 to the aluminium housing 1. The welding and/or brazing portions may extend in a circumferential direction of the grooves 16. The radial, axial and circumferential directions may be referenced to the cylindrical connector 2 geometry.

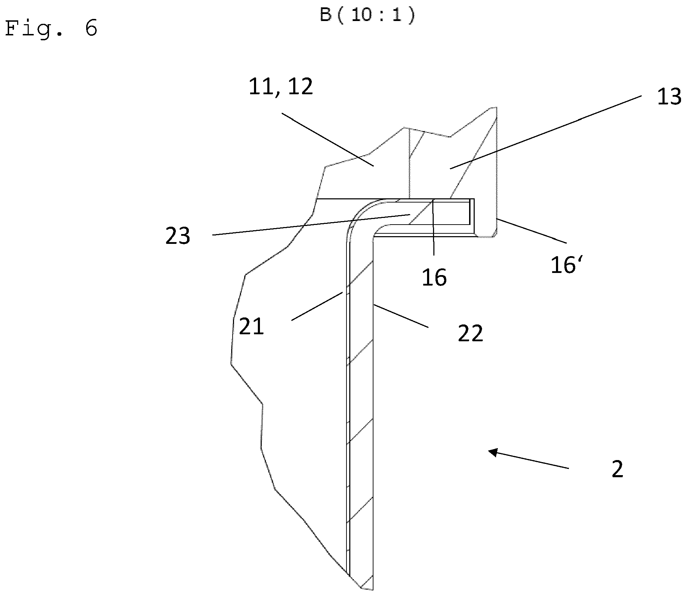

Figure 6 is a detailed section view of the second embodiment of the housing assembly. As can be seen more clearly than in the previous figure, the inner copper layer 21 is brazed and/or welded to the connection portion 13 of the aluminium housing 1. The connector 2 may comprise a flange portion 23 oriented in a radial direction of the connector. The inner copper layer 21 may be provided at least partially on the flange portion 23 for contacting the connection portion 13 of the aluminium housing 1. The connections portion 13 may be formed integrally with the housing 1.

The bi-metal connector 2 may be furnace brazed, conveyor belt brazed, induction brazed, laser brazed, laser welded without a filler, laser welded with a filler, stir welded, rotational welded, ultrasonic welded, electromagnetic pulse welded, TIG welded, and/or MIG welded to the aluminium housing 1. Typically, a single joining technology may be used. However, combinations of two or more of the above joining technologies may be applied as well. The connection between the connector 2 and the connection portion 13 may be provided along the flange portion 23 and the groove 16.

The outer stainless steel layer 22 covers all or a substantial portion of the inner copper layer 21. An interior side of the stainless steel layer 22 may be connected to an exterior side of the inner copper layer 21 via a material connection.

The invention is also directed at a set comprising an aluminium housing 1, at least one bi-metal connector 2 and a sleeve nut 3 for a housing assembly according to at least claim 6. The set may be provided in a state, in which its components are at least partially disconnected from each other. A user may connect the components according to existing requirements.

The presently described invention also covers embodiments, in which the features of the various embodiments are be combined with each other.

## Claims

1. Housing assembly for use in a heat exchange system, comprising an aluminium housing (1) with at least two fluid ports (11, 12), wherein each fluid port (11, 12) is connected to a bi-metal connector (2), wherein the bi-metal connector (2) comprises an inner copper layer (21) and an outer stainless steel layer (22), and wherein the aluminium housing (1) comprises connection portions (13) for connecting the bi-metal connectors (2).

2. Housing assembly according to claim 1, **characterized in that** the connection portions (13) comprise threaded portions, welding portions, and/or brazing portions.

3. Housing assembly according to any of the previous claims, **characterized in that** the inner copper layer (21) is brazed and/or welded to the aluminium housing (1).

4. Housing assembly according to any of the previous claims, **characterized in that** the bi-metal connector (2) is furnace brazed, conveyor belt brazed, induction brazed, laser brazed, laser welded without a filler, laser welded with a filler, stir welded, rotational welded, ultrasonic welded, electromagnetic pulse welded, TIG welded, and/or MIG welded to the aluminium housing (1).

5. Housing assembly according to any of the previous claims, **characterized in that** the outer stainless steel layer (22) covers all or a substantial portion of the inner copper layer (21).

6. Housing assembly according to claim 2, **characterized in that** the connection portions (13) comprise threaded portions and a sleeve nut (3) is screwed to the threaded portion of the connection portions (13), and that a portion of the bi-metal connector (2) is provided between the sleeve nut (3) and the connection portion (13).

7. Set comprising a housing assembly according to any of the preceding claims, and a sleeve nut (3) for a housing assembly according to at least claim 6, wherein the set's components are at least partially disconnected from each other.

## Patentansprüche

1. Gehäuseanordnung zur Verwendung in einem Wärmetauschsystem, umfassend ein Aluminiumgehäuse (1) mit mindestens zwei Fluidanschlüssen (11, 12), wobei jeder Fluidanschluss (11, 12) mit einem Bimetallverbinder (2) verbunden ist, wobei der Bimetallverbinder (2) eine innere Kupferschicht (21) und eine äußere Edelstahlschicht (22) umfasst und wobei das Aluminiumgehäuse (1) Verbindungsabschnitte (13) zum Verbinden der Bimetallverbinder (2) umfasst.

2. Gehäuseanordnung nach Anspruch 1, **dadurch gekennzeichnet, dass** die Verbindungsabschnitte (13) Gewindeabschnitte, Schweißabschnitte und/oder Lötabschnitte umfassen.

3. Gehäuseanordnung nach einem der vorhergehenden Ansprüche, **dadurch gekennzeichnet, dass** die innere Kupferschicht (21) mit dem Aluminiumgehäuse (1) verlötet und/oder verschweißt ist.

4. Gehäuseanordnung nach einem der vorhergehenden Ansprüche, **dadurch gekennzeichnet, dass** der Bimetallverbinder (2) an das Aluminiumgehäuse (1) ofengelötet, förderbandgelötet, induktionsgelötet, lasergelötet, ohne Füllstoff lasergeschweißt, mit Füllstoff lasergeschweißt, rührgeschweißt, drehgeschweißt, ultraschallgeschweißt, elektromagnetisch pulsgeschweißt, WIG-geschweißt und/oder MIG-geschweißt ist.

5. Gehäuseanordnung nach einem der vorhergehenden Ansprüche, **dadurch gekennzeichnet, dass** die äußere Edelstahlschicht (22) die gesamte oder einen wesentlichen Teil der inneren Kupferschicht (21) bedeckt.

6. Gehäuseanordnung nach Anspruch 2, **dadurch gekennzeichnet, dass** die Verbindungsabschnitte (13) Gewindeabschnitte umfassen und eine Überwurfmutter (3) mit dem Gewindeabschnitt der Verbindungsabschnitte (13) verschraubt ist und dass ein Abschnitt des Bimetallverbinders (2) zwischen der Überwurfmutter (3) und dem Verbindungsabschnitt (13) vorgesehen ist.

7. Satz, umfassend eine Gehäuseanordnung nach einem der vorhergehenden Ansprüche und eine Überwurfmutter (3) für eine Gehäuseanordnung zumindest nach Anspruch 6, wobei die Komponenten des Satzes zumindest teilweise voneinander getrennt sind.

## Revendications

1. Ensemble à boîtier pour utilisation dans un système d'échange de chaleur, comprenant un boîtier en aluminium (1) avec au moins deux ports de fluide (11, 12), dans lequel chaque port de fluide (11, 12) est raccordé à un raccord bimétallique (2), dans lequel le raccord bimétallique (2) comprend une couche de cuivre intérieure (21) et une couche d'acier inoxydable extérieure (22), et dans lequel le boîtier d'aluminium (1) comprend des parties de raccordement (13) pour raccorder le raccord bimétalliques (2).

2. Ensemble à boîtier selon la revendication 1, **caractérisé en ce que** les parties de raccordement (13) comprennent des parties filetées, des parties de soudage, et/ou des parties de brasage.

3. Ensemble à boîtier selon de quelconque des revendications précédentes, **caractérisé en ce que** la couche de cuivre intérieure (21) est brasée et/ou soudée au boîtier d'aluminium (1).

4. Ensemble à boîtier selon de quelconque des revendications précédentes, **caractérisé en ce que** le raccord bimétallique (2) est brasé au fur, brasé par courroie transporteuse, brasé par induction, brasé au laser, soudé au laser sans charge, soudé au laser avec charge, soudé par agitation, soudé de façon rotative, soudé par ultrasons, soudé par impulsions électromagnétiques, soudé TIG, et/ou soudé MIG au boîtier d'aluminium (1).

5. Ensemble à boîtier selon de quelconque des revendications précédentes, **caractérisé en ce que** la couche d'acier inoxydable extérieure (22) couvre la totalité ou une grande partie de la couche de cuivre intérieure (21).

6. Ensemble à boîtier selon la revendication 2, **caractérisé en ce que** les parties de raccordement (13) comprennent des parties filetées et un écrou manchon (3) est vissé sur la partie filetée des parties de raccordement (13), et qu'une partie du raccord bimétallique (2) est prévue entre l'écrou manchon (3) et la partie de raccordement (13).

7. Groupe comprenant un ensemble à boîtier selon de quelconques des revendications précédentes, et un écrou manchon (3) pour un ensemble à boîtier selon au moins la revendication 6, dans lequel les composants du groupe sont au moins partiellement disjoints les uns des autres.
